# EUROPEAN PATENT APPLICATION

(11) **EP 4 615 042 A1**
(43) Date of publication of application: **10.09.2025**
(21) Application number: 22969316.3
(22) Date of filing: 21.12.2022
(51) Int. Cl.: H04W 24/10, H04W 24/08, H04B 17/345, H04W 72/231, H04W 72/232, H04L 5/00

(54) **METHOD AND APPARATUS FOR PERFORMING REPORT CONFIGURATION AND RESOURCE CONFIGURATION FOR CHANNEL STATE INFORMATION (CSI) REPORT IN WIRELESS COMMUNICATION SYSTEM**

(71) Applicant: Samsung Electronics Co., Ltd., Suwon-si, Gyeonggi-do 16677 (KR)
(72) Inventor: JUNG, Sangwon, Suwon-si, Gyeonggi-do 16677 (KR); LEE, Kwonjong, Suwon-si, Gyeonggi-do 16677 (KR); LEE, Juho, Suwon-si, Gyeonggi-do 16677 (KR)
(74) Representative: Gulde & Partner
(86) International application number: PCT/KR2022/020953
(87) International publication number: WO 2024/135882

(57) **Abstract**

The disclosure relates to a 5G or 6G communication system for supporting a h igher data transmission rate.According to one embodiment of the disclosure, a method of a base station may comprise the steps of: transmitting, to a terminal, configuration information for channel state information (CSI) measurement; transmitting a message including a channel measurement resource (CMR)-interference measurement resource (IMR) association rule that includes at least one of CMR and IMR mapping information, cross-link interference (CLI) resource indicator information, and CLI power indicator information; transmitting a CSI-reference signal (RS) on the basis of a CMR according to the configuration information; and receiving a preset number of pieces of CSI if CSI is measured on the basis of the configuration information and the CMR-IMR association rule.

## Description

### [Technical Field]

The disclosure relates to a configuration method and apparatus for efficiently measuring channel state information (CSI) and reporting the measured CSI in an environment where cross-link interference (CLI) may occur in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, there is a need for a scheme to enable a terminal to efficiently measure and report channel state information (CSI) in an environment where cross-link interference (CLI) may occur.

### [Disclosure]

### [Technical Problem]

In the case of an environment where cross-link interference may occur in a wireless communication system, a configuration method and a reporting method are provided to efficiently report channel state information (CSI) in consideration of cross-link interference.

### [Technical Solution]

To solve the above problems, a method of a base station in a wireless communication system according to the disclosure may include transmitting configuration information for channel state information (CSI) measurement to a terminal, transmitting a message including a channel measurement resource (CMR)-interference measurement resource (IMR) association rule that includes at least one of CMR and IMR mapping information, cross-link interference (CLI) resource indication information, and CLI power indication information, transmitting a CSI-reference signal (RS) based on the CMR according to the configuration information, and receiving a preconfigured number of CSIs in case that the CSIs are measured based on the configuration information and the CMR-IMR association rule.

A method of a terminal in a wireless communication system according to the disclosure may include receiving configuration information for channel state information (CSI) measurement from a base station, receiving a message including a channel measurement resource (CMR)-interference measurement resource (IMR) association rule that includes at least one of CMR and IMR mapping information, cross-link interference (CLI) resource indication information, and CLI power indication information, receiving a CSI-reference signal (RS) based on the CMR according to the configuration information, measuring CSIs based on the configuration information and the CMR-IMR association rule, and transmitting a preconfigured number of CSIs among the measured CSIs to the base station.

A base station in a wireless communication system according to the disclosure may include a transceiver and a controller controlling to transmit configuration information for channel state information (CSI) measurement to a terminal through the transceiver, transmit a message including a channel measurement resource (CMR)-interference measurement resource (IMR) association rule that includes at least one of CMR and IMR mapping information, cross-link interference (CLI) resource indication information, and CLI power indication information, transmit a CSI-reference signal (RS) based on the CMR according to the configuration information, and receive a preconfigured number of CSIs in case that the CSIs are measured based on the configuration information and the CMR-IMR association rule.

A terminal in a wireless communication system according to the disclosure may include a transceiver and a controller controlling to receive configuration information for channel state information (CSI) measurement from a base station through the transceiver, receive a message including a channel measurement resource (CMR)-interference measurement resource (IMR) association rule that includes at least one of CMR and IMR mapping information, cross-link interference (CLI) resource indication information, and CLI power indication information, receive a CSI-reference signal (RS) based on the CMR according to the configuration information, measure CSIs based on the configuration information and the CMR-IMR association rule, and transmit a preconfigured number of CSIs among the measured CSIs to the base station.

### [Advantageous Effects]

According to the embodiment of the disclosure, the base station can efficiently acquire channel state information in consideration of cross-link interference, and can effectively schedule downlink and uplink resources based on the channel state information, so that it is possible to effectively transmit and receive data between the terminal and the base station.

### [Description of Drawings]

FIG. 1A is a diagram showing an environment in which cross-link interference (CLI) may occur within a cell (intra-cell) according to an embodiment of the disclosure.
FIG. 1b is a diagram showing an environment in which cross-link interference (CLI) may occur within a cell (intra-cell) according to another embodiment of the disclosure.
FIG. 2A is a diagram showing an embodiment in which a base station generally transmits configuration information for CSI reporting to a UE and receives CSI.
FIG. 2B is a diagram showing a plurality of NZP CSI-RS resources and CSI-IM resources configured for a UE by a base station.
FIG. 3A is a sequence diagram showing a method for a base station to transmit configuration information for CSI reporting to a UE and receive CSI according to an embodiment of the disclosure.
FIG. 3B is a diagram showing NZP CSI-RS resources and CSI-IM resources configured for a UE by a base station according to an embodiment of the disclosure.
FIG. 3C is a diagram showing an error case due to a resource mismatch that may occur according to an embodiment of the disclosure.
FIG. 3D is a diagram showing a method for resolving a resource mismatch according to an embodiment of the disclosure.
FIG. 3E is a diagram showing an error case due to a CLI power mismatch that may occur according to an embodiment of the disclosure.
FIG. 3F is a diagram showing a method for resolving a CLI power mismatch according to an embodiment of the disclosure.
FIG. 3G is a diagram showing a base station transmitting a CSI-RS and scheduling an uplink signal according to an embodiment of the disclosure.
FIG. 4 is a diagram showing CSI reported by a UE according to an embodiment of the disclosure.
FIG. 5 is a flowchart showing a method of a base station according to an embodiment of the disclosure.
FIG. 6 is a flowchart showing a method of a UE according to an embodiment of the disclosure,
FIG. 7 is a block diagram showing components of a base station according to an embodiment of the disclosure.
FIG. 8 is a block diagram showing components of a UE according to an embodiment of the disclosure.

### [Mode for Disclosure]

Hereinafter, the operation principle of the disclosure will be described in detail in conjunction with the accompanying drawings. In the following description of the disclosure, a detailed description of known functions or components incorporated herein will be omitted when it may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the description.

In the following description, terms for identifying access nodes, terms referring to network entities, terms referring to messages, terms referring to interfaces between network entities, terms referring to various kinds of identification information, and the like are illustratively used for the sake of convenience. Therefore, the disclosure is not limited by the terms as used below, and other terms referring to subjects having equivalent technical meanings may be used.

In the disclosure, a base station refers to an entity performing resource allocation of a terminal, and may be at least one of a gNode B (gNB), an eNode B (eNB), a Node B, a base station (BS), a radio access unit, a base station controller, or a node on a network. Also, a terminal may include a user equipment (UE), a mobile station (MS), a cellular phone, a smart phone, a computer, or a multimedia system capable of performing a communication function. In the disclosure, a downlink (DL) refers to a wireless transmission path of a signal transmitted from a base station to a terminal, and an uplink (UL) refers to a wireless transmission path of a signal transmitted from a terminal to a base station. In addition, although the LTE or LTE-A system may be described as an example below, the embodiments of the disclosure may be applied to other communication systems having similar technical backgrounds or channel types. For example, the 5G mobile communication technology (new radio, NR) or the 6G mobile communication technology developed after LTE-A may be included in the system to which the embodiments of the disclosure can be applied, and the 5G or 6G generation mobile communication technology may be a concept including the existing LTE, LTE-A, and other similar services. In addition, the embodiments of the disclosure may be applied to other communication systems through some modifications within a range that does not significantly depart from the scope of the disclosure as will be apparent to a person skilled in the art.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. The term "unit", as used herein, refers to a software or hardware component or device, such as a field programmable gate array (FPGA) or application specific integrated circuit (ASIC), which performs certain tasks. However, "unit" is not limited to software or hardware. A "unit" may be configured to reside on an addressable storage medium and configured to execute on one or more processors. Thus, a module or "unit" may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and "units" may be combined into fewer components and "units" or further separated into additional components and modules. In addition, the components and "units" may be implemented to operate one or more central processing "units" (CPUs) in a device or a secure multimedia card. Also, in embodiments, the "unit" may include one or more processors.

For the convenience of explanation below, the disclosure uses terms and names defined in the 5GS and NR standards, which are standards defined by the 3rd Generation Partnership Project (3GPP) organization among the existing communication standards. However, the disclosure is not limited by such terms and names, and can be equally applied to wireless communication networks that conform other standards. For example, the disclosure can be applied to 3GPP 5GS/NR (5th generation mobile communication standard).

In describing an embodiment, the description of technical contents that are well known in the technical field to which the disclosure belongs and are not directly related to the disclosure will be omitted. This is to convey the subject matter of the disclosure more clearly without obscuring it by omitting unnecessary descriptions. Hereinafter, the specific contents of the disclosure will be described. The disclosure provides a method for a UE to measure channel state information (CSI) in consideration of cross-link interference in an environment where the cross-link interference may occur in a wireless communication system, for example, an environment using a full duplex transmission shcme, and for the UE to report the measured result to a base station.

Specifically, in order for a base station to perform resource scheduling for a downlink UE, the base station can receive reports of CSI, such as a rank indicator (RI), a precoding matrix indicator (PMI), and a channel quality indicator (CQI), from the UE.

At this time, for channel information measurement, the UE can utilize a channel measurement resource (CMR) and an interference measurement resource (IMR). The CSI can be derived by utilizing signals measured in the CMR and the IMR. In order for the base station to efficiently schedule the downlink UE and the uplink UE in the same time frequency resource, it is necessary to report one or more CSIs measured according to a combination of respective downlink UEs and uplink UEs.

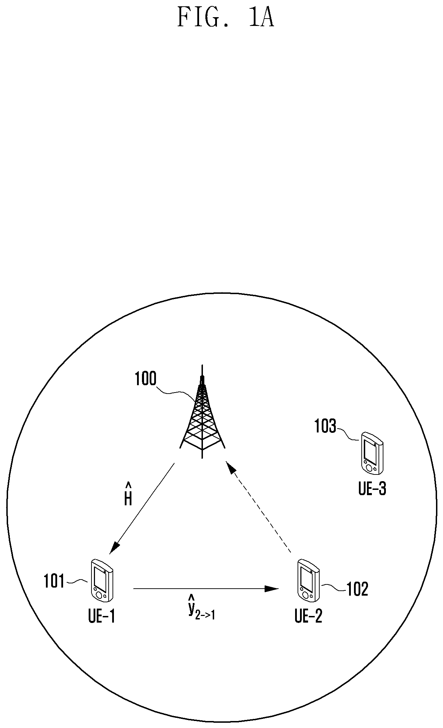

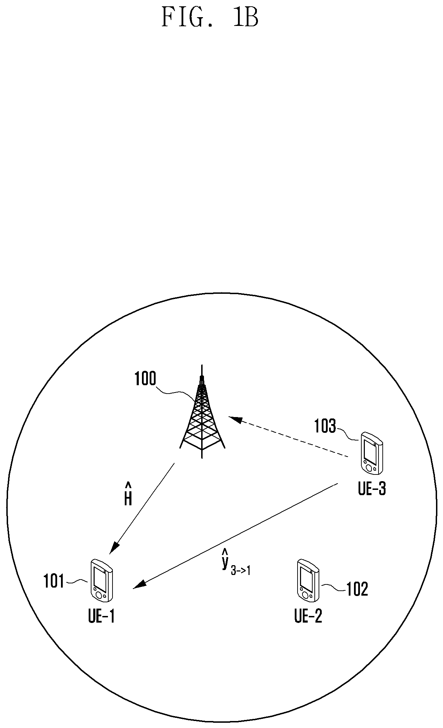

FIGS. 1A and 1B are diagrams showing an environment in which cross-link interference (CLI) may occur within a cell (intra-cell) according to an embodiment of the disclosure.

In the example shown in FIG. 1A, a UE for receiving downlink scheduling from a base station 100 is a first UE 101, and a UE for receiving uplink scheduling is a second UE 102. In this case, the first UE 101 requires channel state measurement between the base station 100 and the first UE 101. In addition, interference from the second UE 102 to the first UE 101 is predicted due to downlink scheduling and uplink scheduling for different UEs. Therefore, in order for the base station 100 to perform downlink scheduling to the first UE 101 and uplink scheduling to the second UE 102 at the same time, channel measurement between the base station 100 and the first UE 101 in consideration of interference between the first UE 101 and the second UE 102 is required.

On the other hand, in the example shown in FIG. 1B, a UE for receiving downlink scheduling from the base station 100 is the first UE 101, and a UE for receiving uplink scheduling is a third UE 103. In this case, the first UE 101 requires channel state measurement between the base station 100 and the first UE 101. In addition, interference from the third UE 103 to the first UE 101 is predicted due to downlink scheduling and uplink scheduling for different UEs. Therefore, in order for the base station 100 to perform downlink scheduling to the first UE 101 and uplink scheduling to the third UE 103 at the same time, channel measurement between the base station 100 and the first UE 101 in consideration of interference between the first UE 101 and the third UE 103 is required.

As shown in FIGS. 1A and 1B, the CSI that the base station should refer to is different depending on each scheduling situation. Specifically, RI, PMI, and CQI can be determined by the predicted channel state and predicted interference. Therefore, the UE should report the CSI including the RI, PMI, and CQI corresponding to each scheduling situation. Accordingly, the UE may need CLI measurement and CSI reporting corresponding to each pair of downlink UE and uplink UE.

Based on this discussion, the disclosure provides a method for measuring a plurality of CSIs considering interference between UEs (i.e., cross-link interference (CLI)) and reporting the measured CSI.

For example, a method for measuring and reporting multiple pieces of channel information considering the CLI may include, in constituting a channel state information reporting method applied to a UE, may include a step in which a base station configures one or more channel measurement resources and one or more interference measurement resources and indicates to the UE the configured information, a step in which the base station indicates to the UE a method for utilizing the configured channel measurement resources and interference measurement resources to derive one or more channel state information, and a step in which the UE selectively reports one or more of the derived channel state information to the base station.

The step in which the base station indicates the UE about the method for utilizing the channel measurement resources and interference measurement resources may include a step of indicating a method of combining channel measurement resources and interference measurement resources to be combined to derive each channel state information, and a step of indicating a method of referring to interference measured in the interference measurement resources when deriving the channel state information.

The step of indicating the method of referring to interference measured in the interference measurement resources may include, by the base station, a step of indicating to the UE a CLI-measured resource in the interference measurement resources, and a step of correcting the size of interference measured in the interference measurement resource.

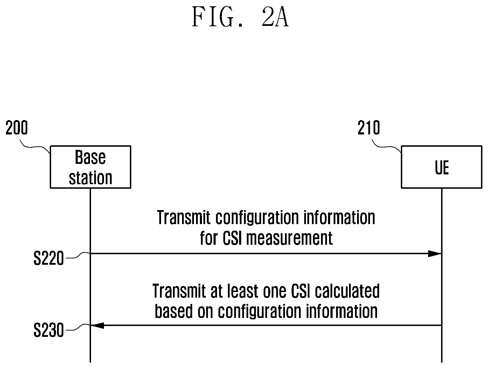

FIG. 2A is a diagram showing an embodiment in which a base station generally transmits configuration information for CSI reporting to a UE and receives CSI.

In step S220, the base station 200 can transmit configuration information for measuring CSI to the UE 210. For example, the base station 200 may include information on at least one resource as the configuration information for CSI measurement by using any information element (IE) of a radio resource control (RRC) message to the UE 210. Specifically, the base station 200 may transmit at least one of channel measurement resource (CMR) information and interference measurement resource (IMR) information to the UE 210. At this time, the base station 200 may configure k (k is a positive integer) pieces of CMR information and IMR information to the UE 210. For example, the base station 200 may transmit information for configuring k non-zero power (NZP) CSI-reference signal (CSI-RS) resources and information for configuring k CSI-interference measurement (CSI-IM) resources to the UE 210. In step S230, the UE 210 can transmit at least one CSI calculated based on the configuration information to the base station 200.

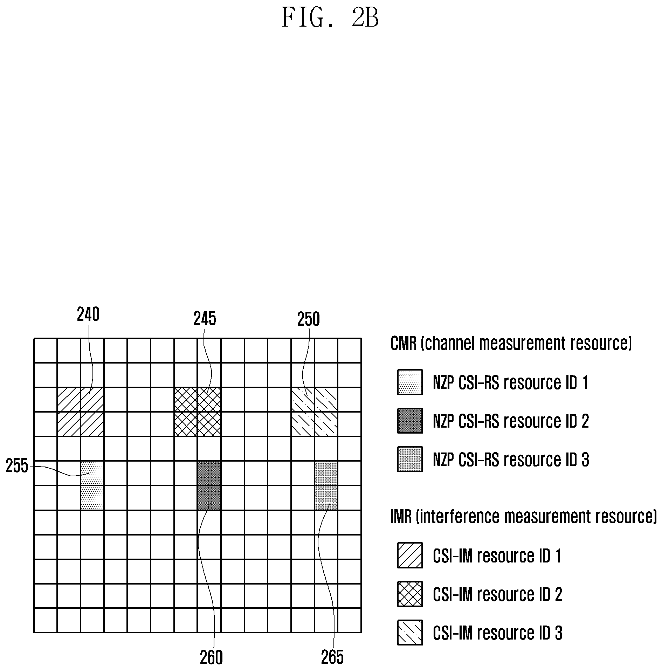

FIG. 2B is a diagram showing a plurality of NZP CSI-RS resources and CSI-IM resources configured for a UE 210 by a base station 200.

With reference to FIG. 2B, the base station 200 can configure to the UE 210, as IMRs, CSI-IM resource identity (ID) 1 (240), CSI-IM ID 2 (245), and CSI-IM ID 3 (250) that indicate different locations. In addition, the base station 200 can configure to the UE 210, as CMRs, NZP CSI-RS resource ID 1 (255), NZP CSI-RS resource ID 2 (260), and NZP CSI-RS resource ID 3 (265) that indicate different locations.

In this case, the UE 210 may calculate (acquire) CSI by using NZP CSI-RS resources and CSI-IM resources having the same ID among the configured k (k is a positive integer) NZP CSI-RS resources and CSI-IM resources. For example, the UE 210 may calculate CSI 1 based on channel information and interference information measured in the resources indicated by CSI-IM resource ID 1 (240) and NZP CSI-RS resource ID 1 (255), respectively. In addition, the UE 210 may calculate CSI 2 based on channel information and interference information measured in the resources indicated by CSI-IM resource ID 2 (245) and NZP CSI-RS resource ID 2 (260), respectively. Also, the UE 210 may calculate CSI 3 based on channel information and interference information measured in the resources indicated by CSI-IM resource ID 3 (250) and NZP CSI-RS resource ID 3 (265), respectively.

The UE 210 may transmit the calculated CSI 1 to CSI 3 to the base station 200. At this time, the UE 210 may select at least one CSI according to a configured criterion and transmit it to the base station 200. For example, the UE 210 may select the best CSI and transmit it to the base station 200.

According to an embodiment of the disclosure, before performing resource scheduling for the UE, the network equipment (e.g., the base station) configures one or more channel state information (CSI) reporting configurations and one or more CSI measurement resource sets corresponding to the CSI reporting configurations for the UE, so that the UE can report the CSI to the network equipment. The CSI measurement resource sets can be used by the UE to measure the CSI. Each CSI measurement resource set may be composed of a channel measurement resource set and an interference measurement resource set. Each channel measurement resource set may be composed of one or M (where M is an integer greater than 1) channel measurement resources (CMRs), and an ID may be allocated for each CMR. In addition, each interference measurement resource set may be composed of one or K (where K is an integer greater than 1) interference measurement resources (IMRs), and an ID may be allocated for each IMR.

In the embodiment of the disclosure, the network equipment can instruct the UE to measure one or N (N is an integer greater than 1) CSIs. There may be an ID corresponding to each CSI. A derivation method corresponding to each CSI may be indicated. The CSI derivation method may include at least three methods, as follows.

Method 1: A combination of CMRs and IMRs to be referenced for deriving the CSI may be indicated. A combination between one CMR and one IMR, a combination between multiple CMRs and one IMR, and a combination between one CMR and multiple IMRs are possible.

Method 2: One or multiple resource elements to be referenced within the IMR when the CSI is derived by utilizing the interference signal measured in the IMR indicated according to Method 1 may be indicated.

Method 3: A method for correcting the size of the interference signal measured in the IMR indicated according to Method 1 and utilizing the size-corrected interference signal in deriving the CSI may be indicated.

Hereinafter, a method in which the network equipment performs configuration for the UE and the UE derives the CSI is described in detail.

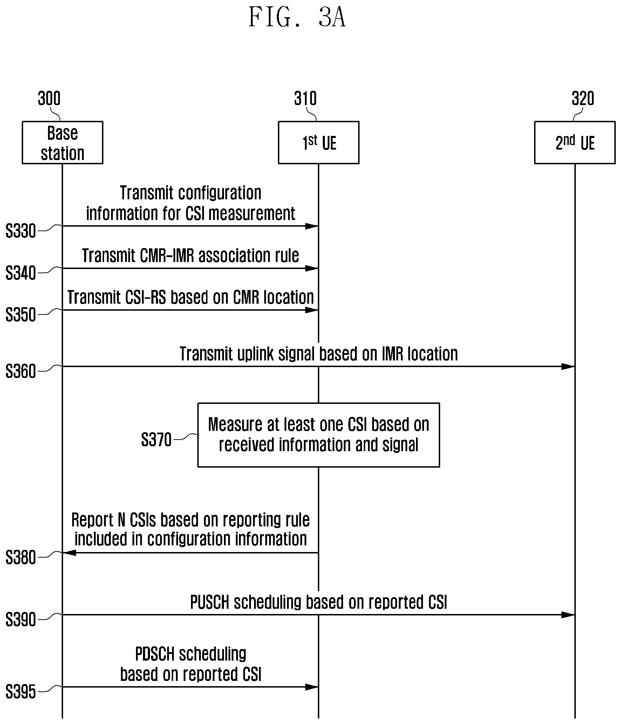

FIG. 3A is a diagram showing an embodiment in which the base station performs downlink scheduling and uplink scheduling to a plurality of UEs according to the disclosure.

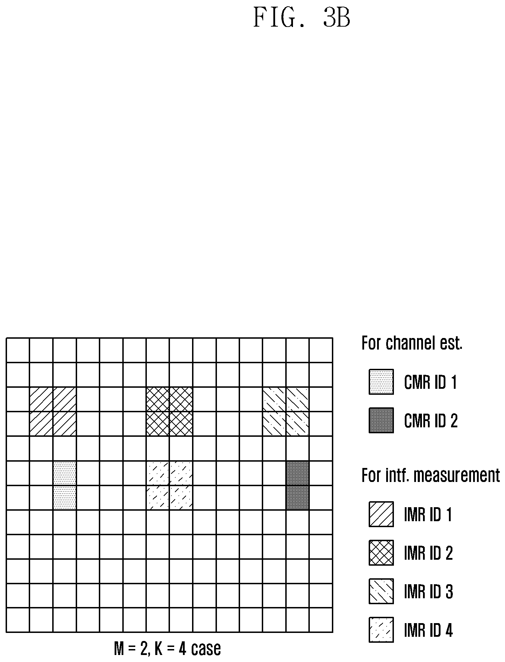

In step S330, the base station 300 may transmit configuration information for CSI measurement to the first UE 310. For example, as shown in FIG. 3B, the base station 300 may configure resources distinguished by CMR ID 1 and CMR ID 2 to the UE in order to configure two CMRs for channel estimation. In addition, the base station 300 may configure resources distinguished by IMR ID 1 to 4 to the UE in order to configure four IMRs for interference measurement to the first UE 310. As such, the base station 300 may transmit configuration information including CMR ID and IMR ID information to the first UE 310. At this time, according to the disclosure, the number of CMRs and IMRs configured may be different.

In step S340, the base station 300 may transmit a CMR-IMR association rule to the first UE 310. According to an embodiment, the base station 300 may transmit mapping configuration between the CMR ID and the IMR ID to the first UE 310. For example, in the example shown in FIG. 3B, the base station 300 may configure {CMR ID 1, IMR ID 1} as first mapping configuration, {CMR ID 2, IMR ID 1,2} as second mapping configuration, and {CMR ID 2, IMR ID 2,4} as third mapping configuration, and transmit them to the UE. The UE that receives the mapping information between the CMR ID and the IMR ID may calculate CSI 1 using the first mapping configuration, calculate CSI 2 using the second mapping configuration, and calculate CSI 3 using the third mapping configuration. The mapping information between the CMR ID and the IMR ID may be transmitted by being included in an RRC message.

According to another embodiment, the base station 300 may transmit CLI resource indication information to indicate the location of a signal for CLI measurement (e.g., sounding reference signal (SRS), physical uplink shared channel (PUSCH), physical uplink control channel (PUCCH), etc.) within the IMR. The base station 300 may transmit information for correcting a mismatch between the location of the IMR and the location where the signal for CLI measurement is transmitted.

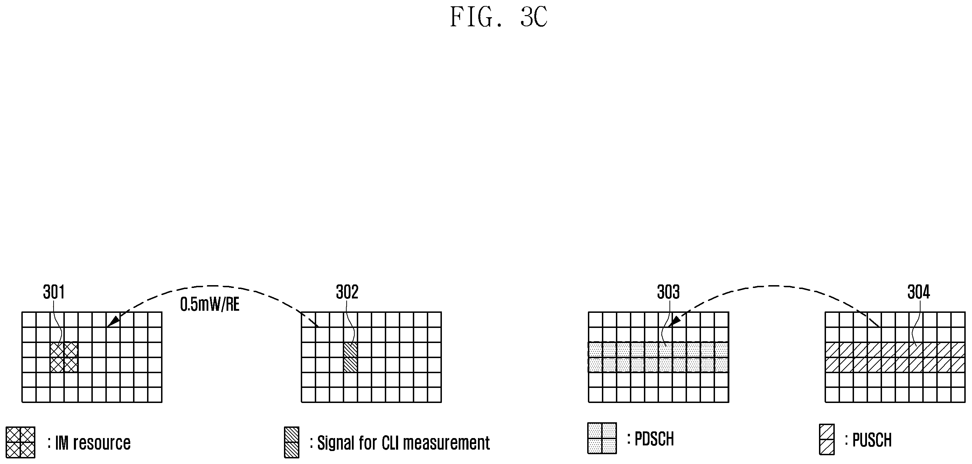

For example, as shown in FIG. 3C, in the case that the IMR is configured as denoted by reference numeral 301, the signal for CLI measurement may be configured as denoted by reference numeral 302, and the CLI size may be measured as 0.5 mW/RE in the IMR 301. However, in this case, if a PDSCH is actually scheduled as denoted by reference numeral 303 to the first UE 310 and a PUSCH is scheduled as denoted by reference numeral 304 to the second UE 320, the CLI size by the PUSCH may actually be 1 mW/RE. As shown in the example of FIG. 3C, in the case that there is an error in the location between the IMR 301) and the CLI measurement signal 302, the measured interference size may be under-measured compared to the CLI that occurs during actual downlink data transmission. Therefore, correction is required.

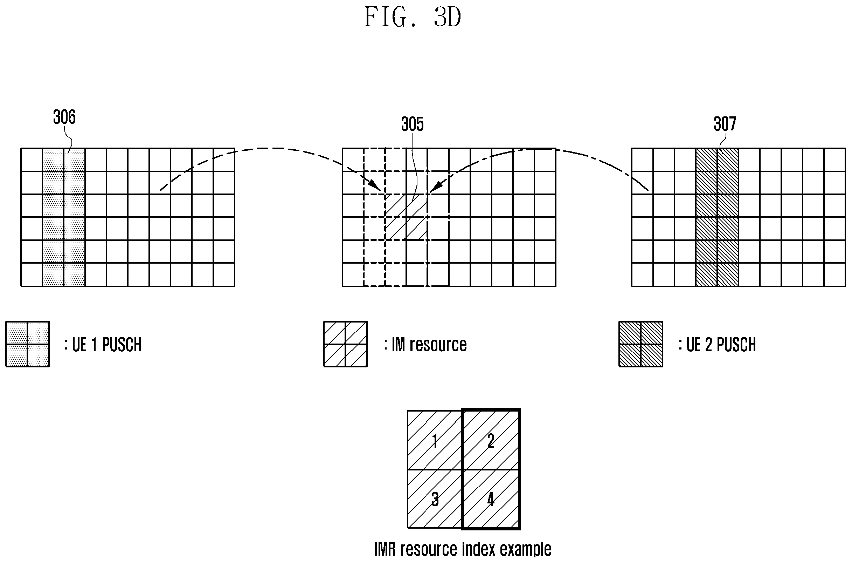

In order to prevent such an error from occurring, when measuring the CLI by using the PUSCH of the UE that transmits uplink data as shown in FIG. 3D, the CLI resource indication information may be used in the case that the locations of the PUSCH and the IMR pattern do not match. Specifically, in the case that the IMR is configured as denoted by reference numeral 305 of FIG. 3D and the PUSCH of an arbitrary UE is as denoted by reference numeral 306, the base station 300 may transmit to the first UE 310 information for indicating IMR resource indexes 1 and 3 as the CLI resource indication information for the arbitrary UE. At this time, the first UE 310 may use the IMR resources indicated by the IMR resource indexes 1 and 3 in the case of measuring the CLI by using the PUSCH 306 of the arbitrary UE. In the case that the PUSCH of another UE is as denoted by reference numeral 307, the base station 300 may transmit to the first UE 310 information for indicating IMR resource indexes 2 and 4 as the CLI resource indication information for the another UE. At this time, the first UE 310 may use the IMR resources indicated by the IMR resource indexes 2 and 4 in the case of measuring the CLI by using the PUSCH 307 of the another UE. Alternatively, the base station 300 may transmit information for indicating all of the IMR resource indexes 1, 2, 3, and 4 as the CLI resource indication information for measuring the CLI by using all of the PUSCHs 306 and 307 of the above-mentioned arbitrary UE and another UE, or may not transmit separate indication information. At this time, the first UE 310 may use the IMR resources indicated by the IMR resource indexes 1, 2, 3, and 4 in the case of measuring the CLI by using all of the PUSCHs 306 and 307 of the arbitrary UE and the another UE. Alternatively, in the case there is no separate CLI resource indication, the first UE 310 may measure the CLI by using the entire configured IMR.

According to yet another embodiment, the base station 300 may transmit CLI power indication information for correcting CLI power mismatch that may occur between the IMR and the CLI measurement signal (e.g., SRS, PUSCH, PUCCH, etc.). The CLI power indication information may be information for indicating a power difference between the interference measurement time and the downlink data transmission time in the configured IMR.

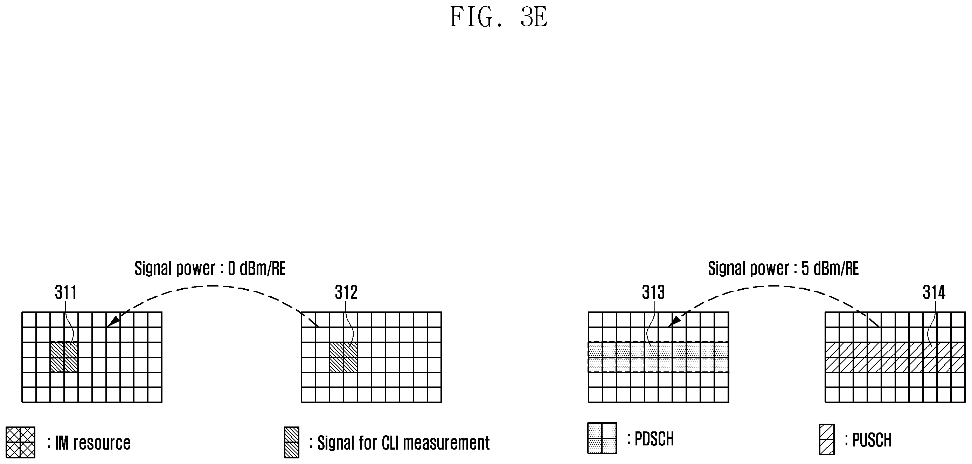

For example, as shown in FIG. 3E, in the case where the IMR is configured as denoted by reference numeral 311, the CLI measurement signal may be configured as denoted by reference numeral 312, and the CLI signal power may be measured as 0 dBm/RE in the IMR 311. However, in this case, if the PDSCH is actually scheduled to the first UE 310 as denoted by reference numeral 313, and the PUSCH is scheduled to the second UE 320 as denoted by reference numeral 314, the CLI signal power by the PUSCH may actually be 5 dBm/RE. As shown in the example of Fig. 3E, the size of interference measured due to CLI power mismatch may be under- or over-measured compared to the CLI that occurs during actual downlink data transmission. Therefore, correction is required.

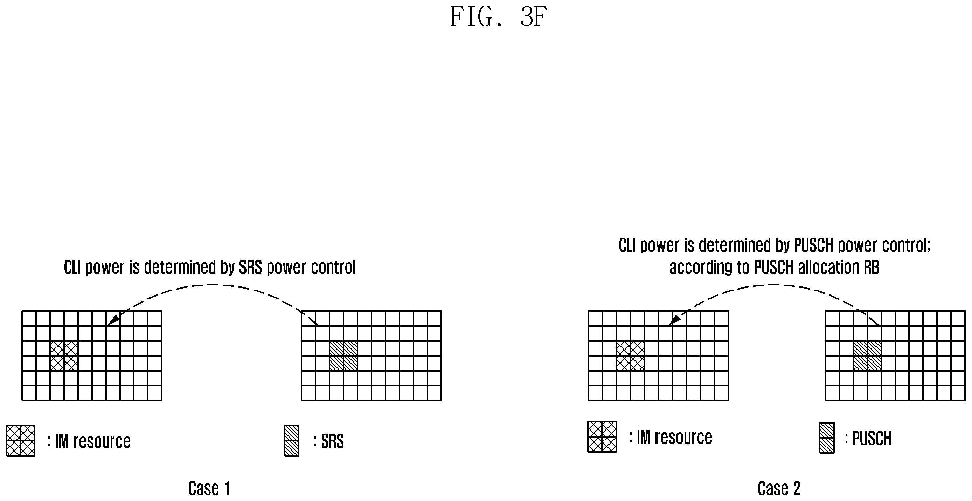

For correction, as shown in FIG. 3F, the SRS or PUSCH of the UE that transmits uplink data may be utilized when measuring the CLI. For example, a power spectral density measured in the IMR at the measurement time and a CLI power density at the PDSCH reception time may be different. Accordingly, the CLI power may be determined by the SRS power control as in case 1 of FIG. 3F. Or, the CLI power may be determined by the PUSCH power control according to the PUSCH allocation RB as in case 2 of FIG. 3F.

In an embodiment where the base station 300 transmits the CLI power indication, the signal power such as the SRS or PUSCH may be explicitly transmitted. Or, in the case that the CLI power at the PDSCH transmission time is known, the base station 300 may transmit it in an offset format.

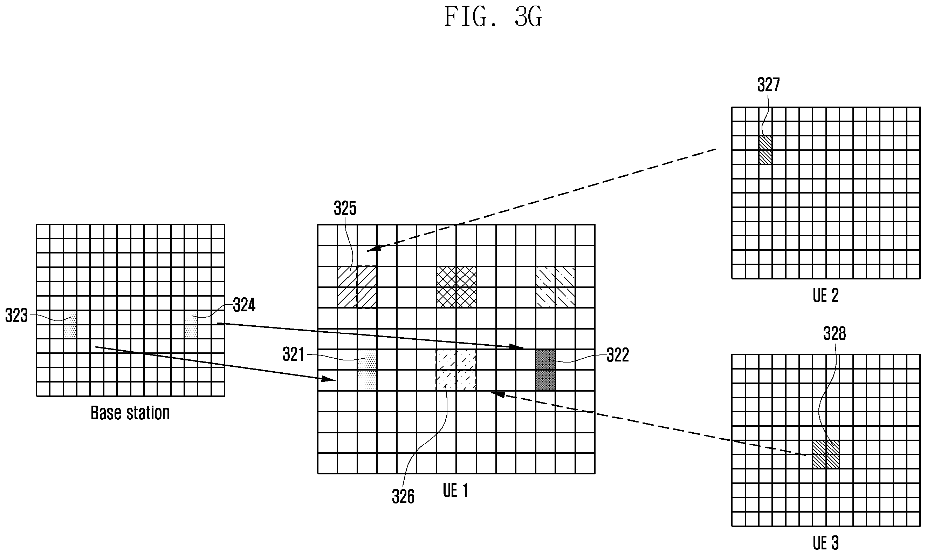

In step S350, the base station 300 may transmit a CSI-RS to the first UE 310 based on the CMR location. In step S360, the base station 300 may transmit an uplink signal to the second UE 320 based on the IMR location. Specifically, in an example shown in FIG. 3G, the base station 300 may transmit downlink data 323 and 324 in CMRs 321 and 322, respectively. Also, in resources 325 and 326 configured as IMRs to the first UE 310, the second UE 320 and the like may transmit uplink signals 327 and 328 according to the scheduling of the base station 300.

In step S370, the first UE 310 may measure at least one CSI based on the received information and signal. For example, according to the above-described contents, the first UE 310 may calculate at least one CSI based on mapping configuration information between the CMR ID and the IMR ID and information for correcting resource location mismatch and signal power mismatch as mismatch information.

In step S380, the first UE 310 may report N (N is a positive integer) CSIs to the base station 300 based on a reporting rule included in the configuration information. The base station 300 may transmit information such as reporting all CSIs calculated with the reporting rule or selecting and reporting the best CSI. The first UE 310 may transmit at least one of the CSIs calculated based on the reporting rule to the base station 300.

In step S390, the base station 300 may schedule a PUSCH based on the reported at least one CSI to the second UE 320. In step S395, the base station 300 may schedule a PDSCH based on the reported at least one CSI to the first UE 310.

Hereinafter, a method in which the base station transmits configuration information for CSI measurement to the UE is disclosed according to a specific embodiment.

In an embodiment of the disclosure, in relation to a method of indicating a derivation method corresponding to each CSI, the network equipment (e.g., the base station) may add a new field (e.g., CM-IM-resoureAssociation) that indicates a method for deriving each CSI through radio resource control (RRC) signaling. The new field may include mismatch information as well as CMR-IMR mapping information. At this time, one or more CSI IDs may be preconfigured in the new field, and a CSI derivation method corresponding to each CSI ID may be configured. An example of this is as shown in Table 1 below.

**[Table 1]**

| |
|---|
| CM-IM-resourceAssociation : |
| { |
| association-ID-list { |
| association ID 1 {mappinginfo, cliresourceindication, clipowerindication,... } |
| association ID 2 {mappinginfo, cliresourceindication, clipowerindication,... } |
| ...} |

Some of the preconfigured CSI IDs may be activated by the network equipment to the UE through medium access control - control element (MAC-CE) signaling or downlink control information (DCI) signaling. At this time, for one or more activated CSI IDs, the UE may perform CSI measurement.

Regarding a method of activating the CSI ID, an activation state to be activated and measured in the UE may be configured in the new field, and an ID may be configured for each activation state. In addition, each activation state corresponds to one or more CSI IDs (e.g., association ID). For example, if activation ID 1 corresponding to CSI ID 1 and CSI ID 2 is indicated to the UE and activated, the UE will measure two CSIs for CSI IDs 1 and 2.

According to an embodiment, an IE for triggering association IDs corresponding to each state ID by configuring a trigger state list via an RRC message is as shown in Table 2 below.

**[Table 2]**

| |
|---|
| associationTriggerStateList{ |
| state 1: {association ID n1, n2, ...} |
| state 2: {association ID m1, m2, ...} |
| ... |
| } |

According to an embodiment, the association ID to be triggered may be transmitted via MAC CE or DCI. In addition, regarding the method of activating the CSI ID, information for configuring an activation period of the CSI ID may be added to the new field, and each CSI ID may be activated according to the configured period. For example, in the case of periodically triggering an arbitrary association ID, a period may be configured for each association ID. An example of using an RRC message is as shown in Table 3 below.

**[Table 3]**

| |
|---|
| (optional) associationIdPeriod{ |
| association ID 1: x1 slot |
| association ID 2: x2 slot |
| ... |
| } |

In the case that a configuration corresponding to a method for measuring the CSI to be reported to the network equipment is not preconfigured via a CSI ID in an RRC message, the network equipment may explicitly indicate to the UE Methods 1 to 3 corresponding to the CSI derivation method through MAC-CE or DCI.

In an embodiment of the disclosure, Method 1: A method of indicating a combination of CMR and IMR to be referenced for deriving CSI may be indicated as follows.

In the new field, one or more CMRs and one or more IMRs may be mapped and preconfigured, and a mapping ID may be assigned for each configuration. For example, mapping ID 1-{CMR ID 1, IMR ID 2} means a mapping relationship between CMR ID 1 and IMR ID 2, and one or more mapping IDs may be preconfigured through a mapping ID list. Through this, a combination of CMR and IMR to be referenced in order to derive CSI may be indicated.

The new field may be included in an RRC message as shown in Table 4 below.

**[Table 4]**

| |
|---|
| CM-IM-resourceAssociation : |
| { |
| association-ID-list { |
| association ID 1 {mappinginfo, |
| cliresourceindication, |
| clipowerindication,... } |
| association ID 2 {mappinginfo, |
| cliresourceindication, |
| clipowerindication,... } |
| ...} |
| ... |
| mapping-ID-list { |
| mapping ID 1 { CMR ID 1, IMR ID 2} |
| mapping ID 2 { CMR ID 2, IMR ID 2, IMR ID 3 }...} |

In the case that a configuration corresponding to a method for measuring the CSI to be reported to the network equipment is not preconfigured via a CSI ID in an RRC message, the network equipment may explicitly indicate to the UE a combination method of CMR and IMR in the CSI derivation method through MAC-CE or DCI. At this time, in the case that the corresponding combination method is preconfigured in the mapping ID list, the mapping ID may be explicitly indicated. In the case that the corresponding combination method is not preconfigured in the mapping ID list, there may be a method of explicitly indicating the CMR ID and the IMR ID to be combined, and a method of simultaneously transmitting the mapping ID and the IMR ID or the CMR ID. For example, in the case that mapping ID 1 - {CMR ID 1, IMR ID 2} is preconfigured, and mapping ID 1 and IMR ID 3 are indicated, the UE may derive the CSI by using CMR ID 1 and IMR IDs 2 and3. The above-described method may be indicated from the network equipment to the UE through MAE-CE or DCI.

Meanwhile, according to an embodiment of the disclosure, the RRC message may include a field for mapping information and a new field for mismatch information. For example, the RRC message may include mapping information between CMR ID and IMR ID, where {CMR ID 1, IMR ID 1} is configured as a first mapping configuration, {CMR ID 2, IMR ID 1,2} is configured as a second mapping configuration, and {CMR ID 2, IMR ID 2,4} is configured as a third mapping configuration. In addition, the RRC message may include mismatch information, which includes CLI resource indication information for correcting an error due to locations between the IMR and the CLI measurement signal, and CLI power indication information for correcting an error due to signal powers between the IMR and the CLI measurement signal. The mapping information and the mismatch information may be included in respective fields. The mapping information may be transmitted at a longer period than the mismatch information.

According to another embodiment of the disclosure, the mapping information may be included in any field in the RRC message, and the mismatch information may be transmitted via DCI or MAC CE.

In the embodiment of the disclosure, Method 2: A method of indicating one or more resource elements to be referenced within the IMR when deriving the CSI by utilizing the interference signal measured in the IMR may be indicated as follows.

In the new field, a CLI resource case specifying one or more resource element locations to be referenced in the IMR may be preconfigured. Alternatively, a CLI resource case ID may be assigned for each configuration, and a method of using a predefined index to specify the corresponding resource element location, a method of transmitting an offset on the time-frequency axis and the number of consecutive resource elements, etc. may be used.

In the case that the configuration corresponding to the method of measuring the CSI to be reported to the network equipment is not preconfigured as a CSI ID in the RRC message, the network equipment may explicitly indicate the CLI resource case ID to the UE through MAC-CE or DCI in the case that the resource element in the IMR to be referenced when deriving the CSI in the CSI derivation method is preconfigured as the CLI resource case ID. In the case of being not preconfigured, the following methods may be used to indicate.

There may be a method of predefining each index of the resource elements constituting the IMR and transmitting the location of the resource element to be referenced when deriving the CSI as an index, a method of transmitting the predefined indexes in the form of a bitmap, a method of transmitting a reference index and the number of consecutive resource elements on the time-frequency axis, and a method of transmitting the ratio of the number of resource elements to be referenced to the total number of resources in the IMR.

As an example of the method of predefining each index of the resource elements constituting the IMR and transmitting the location of the resource elements to be referenced when deriving the CSI as an index, indexes {2, 4} in the aforementioned FIG. 3D may be transmitted via DCI or MAC CE.

An example of the method of predefining each index of the resource elements constituting the IMR and transmitting the predefined index in the form of a bitmap, a bitmap {0101} in the aforementioned FIG. 3D may be transmitted via DCI or MAC CE.

As an example of the method of predefining each index of the resource elements constituting the IMR and transmitting the location of a signal to perform interference measurement for deriving the CSI with a reference index and the number of consecutive resource elements on the time-frequency axis, {4, 1, 2} in the aforementioned FIG. 3D may be transmitted via DCI or MAC CE.

As an example of the method of transmitting the ratio of the number of resource elements to be referenced to the total number of resources in the IMR, 0.5 may be transmitted via DCI or MAC CE.

In the embodiment of the disclosure, Method 2: A method of indicating a method of correcting the size of the measured interference signal when deriving the CSI by utilizing the interference signal measured in the IMR may be indicated as follows.

In the new field, a CLI power case specifying the degree of correction of interference signal measured using the IMR may be preconfigured, and a CLI power case ID may be assigned for each configuration. For example, in the case of CLI power case ID 1 - {2dB}, when deriving the CSI by using the CLI power case ID 1, the CSI may be derived by reflecting a value 2dB higher than the measured interference signal. According to an example, the base station may transmit information to the CSI measuring UE by configuring the CLI power indication ID in the association ID field of the RRC message. Or, the base station may transmit the CLI power indication ID and the association ID to the CSI measuring UE via MAC CE or DCI.

In the case that the configuration corresponding to the method of measuring the CSI to be reported to the network equipment is not preconfigured as the CSI ID in the RRC message, the network equipment may explicitly indicate the CLI power case ID to the UE through MAC-CE or DCI in the case that the degree of correction of interference size to be referenced when deriving the CSI in the CSI derivation method is preconfigured as the CLI power case ID. Alternatively, in the case of being not preconfigured, the following methods may be used to indicate.

The UE may be indicated based on preconfigured bit information and the degree of correction. For example, 1-bit transmission may be used. Also, after the initial degree of correction is transmitted to the UE, the UE may be indicated to increase or decrease the degree of correction based on the preconfigured bit information and the degree of correction, and 1-bit transmission may be used.

According to an embodiment, in case of using multiple bits, the base station may transmit the power difference between the interference measurement time and the downlink transmission time to the UE through MAC CE or DCI.

According to another embodiment, in case of using 1 bit, the base station may indicate the power difference between the interference measurement time and the downlink transmission time to the UE as positive or negative by using 1 bit through MAC CE or DCI.

According to yet another embodiment, the base station may transmit an initial power difference value to the UE. In addition, the base station may signal the increase and/or decrease of the power difference by using 1 bit. At this time, the base station may also separately configure an offset per bit. For example, in the case that the initial power difference value is 0 and the offset per bit is configured as 1 dBm, the base station may indicate a value of 5 dBm to the UE by transmitting 5 bits as { 1 1 1 1 1}.

In an embodiment of the disclosure, among one or N (N is an integer greater than 1) CSIs derived based on the above-described method, the UE may selectively report L (L is 0 or a natural number less than N) CSIs to the base station. The selection and reporting rules may be indicated to the UE from the network equipment by adding a new field in the CSI reporting configuration, and the following reporting rules may be included.

The reporting rules may be configured as follows: a method in which the UE reports all N CSIs out of a total of N CSIs, a method in which L CSIs are reported in the order of high CQI, a method in which L CSIs are reported in the order of low CQI, a method in which L1 CSIs having the highest CQI and L2 CSIs having the lowest CQI are reported, a method in which L CSIs are reported in the order of high achievable transmission rate, a method in which L CSIs are reported in the order of low achievable transmission rate, and a method in which L1 CSIs having the highest achievable transmission rate and L2 CSIs having the lowest achievable transmission rate are reported. The network equipment may change the values of L1 and L2 through DCI or MAC-CE. In addition, the network equipment may configure to report all CSIs satisfying a threshold among the N measured CSIs. In this case, the type of threshold may be, for example, CQI or achievable transmission rate. It may be indicated to the UE through RRC signaling. The value of the threshold may be configured through RRC signaling or DCI or MAC-CE.

According to an embodiment of the disclosure, the base station may configure the UE to report all the measured CSI. Or, the base station may configure the UE to report CSI corresponding to best N out of all the N CSI measurement results. Or, the base station may configure the UE to report CSI corresponding to best n1 and worst n2 out of all the N CSI measurement results. Or, in the above configurations, the base station may change N, n1, and n2 through DCI or MAC CE. Or, the base station may configure the UE to report CSI greater than or equal to a threshold value among a plurality of measured CSIs. According to an embodiment, the type of the threshold value may be configured as CQI or sum-rate using an RRC parameter. According to another embodiment, the threshold value may be configured using an RRC parameter or through DCI or MAC CE.

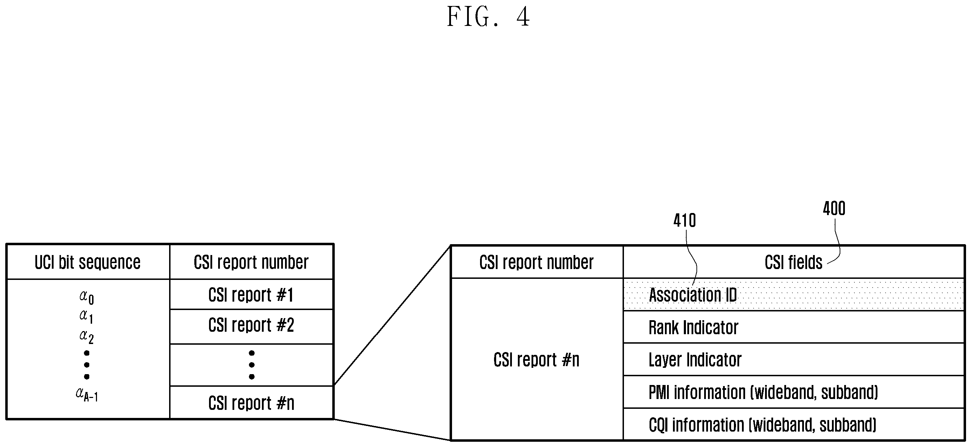

In the embodiment of the disclosure, L CSIs determined by the above-described method may be transmitted by adding a new mapping rule to a general CSI report mapping rule (e.g., the CSI report mapping rule disclosed in 38.212-Table 6.3.1.1.2-1~10). For example, as shown in FIG. 4, an association ID 410 may be added to a CSI field 400 corresponding to each CSI report number.

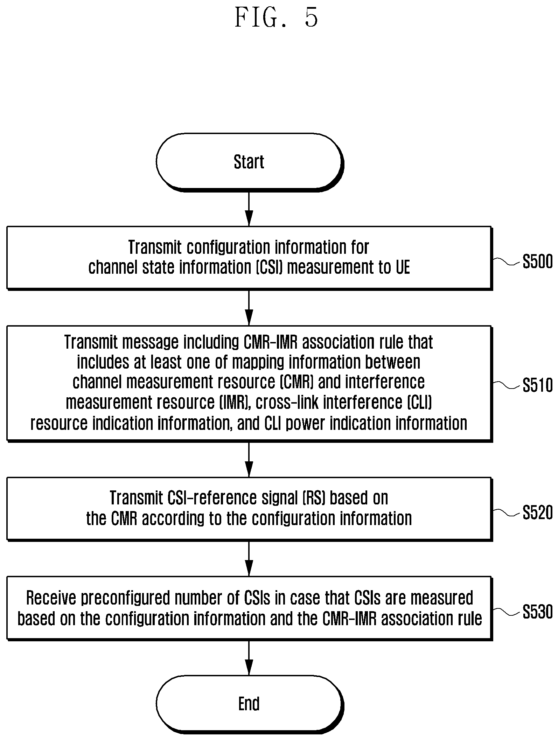

Meanwhile, FIG. 5 is a flowchart showing a method of a base station according to an embodiment of the disclosure.

In step S500, the base station may transmit configuration information for measuring channel state information (CSI) to the UE. In step S510, the base station may transmit a message including a CMR-IMR association rule that includes at least one of mapping information between channel measurement resources (CMR) and interference measurement resources (IMR), cross-link interference (CLI) resource indication information, and CLI power indication information. In step S520, the base station may transmit a CSI-reference signal (RS) based on the CMR according to the configuration information. In step S530, when CSIs are measured based on the configuration information and the CMR-IMR association rule, the base station may receive a preconfigured number of CSIs.

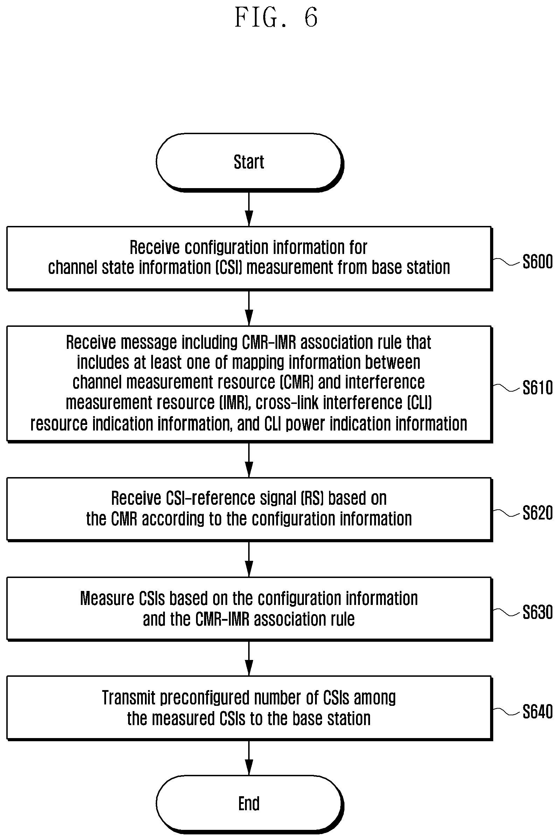

Meanwhile, FIG. 6 is a flowchart showing a method of a UE according to an embodiment of the disclosure,

In step S600, the UE may receive configuration information for measuring channel state information (CSI) from the base station. In step S610, the UE may receive a message including a CMR-IMR association rule that includes at least one of mapping information between channel measurement resources (CMR) and interference measurement resources (IMR), cross-link interference (CLI) resource indication information, and CLI power indication information. In step S620, the UE may receive a CSI-reference signal (RS) based on the CMR according to the configuration information. In step S630, the UE may measure CSIs based on the configuration information and the CMR-IMR association rule. In step S640, the UE may transmit a preconfigured number of CSIs among the measured CSIs to the base station.

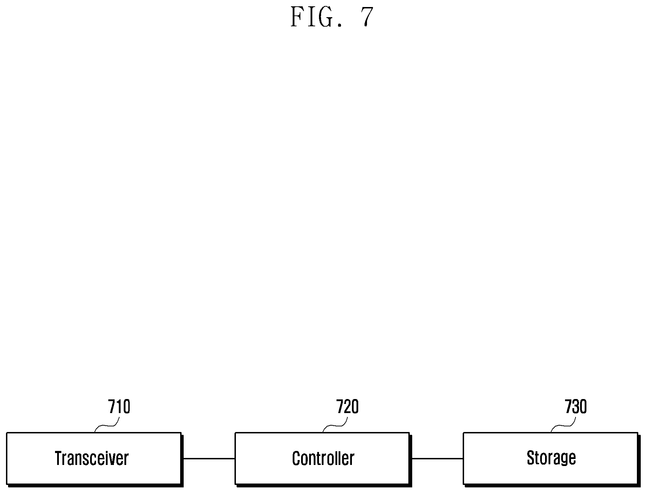

FIG. 7 is a block diagram showing components of a base station according to an embodiment of the disclosure. With reference to FIG. 7, the base station may include a transceiver 710, a controller 720, and a storage 730. In the disclosure, the controller may be defined as a circuit or an application-specific integrated circuit or at least one processor.

The transceiver 710 may transmit and receive signals with other network entities. The transceiver 710 may transmit, for example, an RRC message or a CSI-RS to a UE and receive a CSI report.

The controller 720 may control the overall operation of the base station according to the embodiment proposed in the disclosure. For example, the controller 720 may control the signal flow between respective blocks to perform the operation according to the flowchart described above. Specifically, the controller 720 may control the operation of generating and transmitting the configuration information for CSI measurement and the CMR-IMR association rule in order to receive the CSI report from the UE according to the embodiment of the disclosure.

The storage 730 may store at least one of information transmitted and received through the transceiver 710 and information generated through the controller 720. For example, the storage 730 may store the configuration information for CSI measurement, the mapping information of CMR-IMR, the CLI resource indication information, the CLI power indication information, etc.

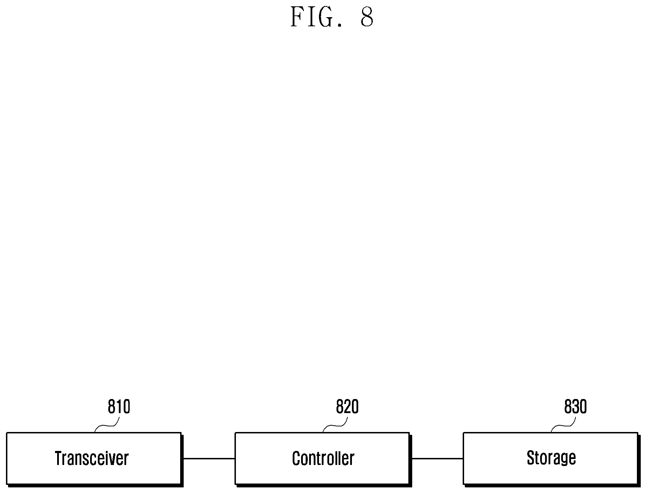

FIG. 8 is a block diagram showing components of a UE according to an embodiment of the disclosure.

With reference to FIG. 8, the UE may include a transceiver 810, a controller 820, and a storage 830. In the disclosure, the controller may be defined as a circuit or an application-specific integrated circuit or at least one processor.

The transceiver 810 may transmit and receive signals with other network entities. The transceiver 810 may receive, for example, an RRC message or a CSI-RS from a base station and transmit a CSI report.

The controller 820 may control the overall operation of the UE according to the embodiment proposed in the disclosure. For example, the controller 820 may control the signal flow between respective blocks to perform the operation according to the flowchart described above. Specifically, in order to transmit the CSI report to the base station according to the embodiment of the disclosure, the controller 820 may control the operation of receiving the configuration information for CSI measurement and the CMR-IMR association rule and generating the CSI report based on the received configuration information and rule.

The storage 830 may store at least one of information transmitted and received through the transceiver 810 and information generated through the controller 820. For example, the storage 830 may store the configuration information for CSI measurement, the mapping information of CMR-IMR, the CLI resource indication information, the CLI power indication information, the generated CSI, etc.

According to the embodiment described above, the base station can efficiently acquire channel state information in consideration of cross-link interference, and can effectively schedule downlink and uplink resources based on the channel state information, so that it is possible to effectively transmit and receive data between the UE and the base station.

The methods according to embodiments described herein may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Meanwhile, the embodiments of the disclosure disclosed in the description and drawings are only specific examples presented to easily explain the technical contents of the disclosure and help in understanding the disclosure, and are not intended to limit the scope of the disclosure. In other words, it is apparaent to a person having ordinary skill in the art to which the disclosure pertains that other modified examples based on the technical idea of the disclosure are possible. In addition, each of the above embodiments may be combined and operated as needed. For example, in the disclosure, parts of one embodiment and parts of another embodiment may be combined and operated in a base station and a terminal. For example, parts of the first embodiment and the second embodiment of the disclosure may be combined and operated in a base station and a terminal. In addition, although the above embodiments have been presented based on the FDD LTE system, other modified examples based on the technical idea of the above embodiments may be implemented in other systems such as the TDD LTE system, 5G, or NR system.

Meanwhile, the order of description in the drawings explaining the method of the disclosure does not necessarily correspond to the order of execution, and the order of precedence may be changed or executed in parallel.

Additionally, the drawings explaining the method of the disclosure may omit some components and include only some components within the scope that does not harm the essence of the disclosure.

In addition, the method of the disclosure may be executed by combining some or all of the contents included in respective embodiments within the scope that does not harm the essence of the disclosure.

While the disclosure has been particularly shown and described with reference to an exemplary embodiment thereof, it will be understood by those skilled in the art that various changes in form and details may be made therein without departing from the scope of the disclosure as defined by the appended claims. Therefore, the scope of the disclosure should not be limited to the described embodiments, but should be defined not only by the scope of claims below but also by equivalents of the claims.

## Claims

1. A method of a base station in a wireless communication system, the method comprising:
transmitting configuration information for channel state information (CSI) measurement to a terminal;
transmitting a message including a channel measurement resource (CMR)-interference measurement resource (IMR) association rule that includes at least one of CMR and IMR mapping information, cross-link interference (CLI) resource indication information, and CLI power indication information;
transmitting a CSI-reference signal (RS) based on the CMR according to the configuration information; and
receiving a preconfigured number of CSIs in case that the CSIs are measured based on the configuration information and the CMR-IMR association rule.

2. The method of claim 1, wherein the CLI resource indication information is information for correcting a difference between locations where the configured IMR and a CLI measurement signal are transmitted, and
wherein the CLI power indication information is information for indicating a power difference between an interference measurement timepoint in the configured IMR and a downlink data transmission timepoint.

3. The method of claim 1,
wherein the CMR-IMR association rule defines an arbitrary related identifier, and includes at least one of the CMR-IMR mapping information corresponding to the arbitrary related identifier, the CLI resource indication information, and the CLI power indication information, or
wherein the CMR-IMR association rule defines an arbitrary related identifier, and in case of including the CMR-IMR mapping information corresponding to the arbitrary related identifier, the CMR-IMR mapping information includes at least one IMR information mapped to an arbitrary CMR, and at least one of the CLI resource indication information and the CLI power indication information is transmitted via downlink control information (DCI) or a medium access control - control element (MAC CE), and
wherein the message is a radio resource control (RRC) message.

4. The method of claim 1, further comprising:
transmitting CSI reporting information to indicate the preconfigured number of CSIs received from the terminal,
wherein the configuration information includes information for configuring the CMR and information for configuring the IMR, and
wherein the number of configured CMRs and the number of configured IMRs do not match.

5. A method of a terminal in a wireless communication system, the method comprising:
receiving configuration information for channel state information (CSI) measurement from a base station;
receiving a message including a channel measurement resource (CMR)-interference measurement resource (IMR) association rule that includes at least one of CMR and IMR mapping information, cross-link interference (CLI) resource indication information, and CLI power indication information;
receiving a CSI-reference signal (RS) based on the CMR according to the configuration information;
measuring CSIs based on the configuration information and the CMR-IMR association rule; and
transmitting a preconfigured number of CSIs among the measured CSIs to the base station.

6. The method of claim 5, wherein the CLI resource indication information is information for correcting a difference between locations where the configured IMR and a CLI measurement signal are transmitted, and
wherein the CLI power indication information is information for indicating a power difference between an interference measurement timepoint in the configured IMR and a downlink data transmission timepoint.

7. The method of claim 5,
wherein the CMR-IMR association rule defines an arbitrary related identifier, and includes at least one of the CMR-IMR mapping information corresponding to the arbitrary related identifier, the CLI resource indication information, and the CLI power indication information, or
wherein the CMR-IMR association rule defines an arbitrary related identifier, and in case of including the CMR-IMR mapping information corresponding to the arbitrary related identifier, the CMR-IMR mapping information includes at least one IMR information mapped to an arbitrary CMR, and at least one of the CLI resource indication information and the CLI power indication information is transmitted via downlink control information (DCI) or a medium access control - control element (MAC CE), and
wherein the message is a radio resource control (RRC) message.

8. A base station in a wireless communication system, comprising:
a transceiver; and
a controller controlling to transmit configuration information for channel state information (CSI) measurement to a terminal through the transceiver, transmit a message including a channel measurement resource (CMR)-interference measurement resource (IMR) association rule that includes at least one of CMR and IMR mapping information, cross-link interference (CLI) resource indication information, and CLI power indication information, transmit a CSI-reference signal (RS) based on the CMR according to the configuration information, and receive a preconfigured number of CSIs in case that the CSIs are measured based on the configuration information and the CMR-IMR association rule.

9. The base station of claim 8, wherein the CLI resource indication information is information for correcting a difference between locations where the configured IMR and a CLI measurement signal are transmitted, and
wherein the CLI power indication information is information for indicating a power difference between an interference measurement time in the configured IMR and a downlink data transmission time.

10. The base station of claim 8,
wherein the CMR-IMR association rule defines an arbitrary related identifier, and includes at least one of the CMR-IMR mapping information corresponding to the arbitrary related identifier, the CLI resource indication information, and the CLI power indication information, or
wherein the CMR-IMR association rule defines an arbitrary related identifier, and in case of including the CMR-IMR mapping information corresponding to the arbitrary related identifier, the CMR-IMR mapping information includes at least one IMR information mapped to an arbitrary CMR, and at least one of the CLI resource indication information and the CLI power indication information is transmitted via downlink control information (DCI) or a medium access control - control element (MAC CE), and
wherein the message is a radio resource control (RRC) message.

11. The base station of claim 8, wherein the controller controls to transmit CSI reporting information through the transceiver to indicate the preconfigured number of CSIs received from the terminal,
wherein the configuration information includes information for configuring the CMR and information for configuring the IMR, and
wherein the number of configured CMRs and the number of configured IMRs do not match.

12. A terminal in a wireless communication system, comprising:
a transceiver; and
a controller controlling to receive configuration information for channel state information (CSI) measurement from a base station through the transceiver, receive a message including a channel measurement resource (CMR)-interference measurement resource (IMR) association rule that includes at least one of CMR and IMR mapping information, cross-link interference (CLI) resource indication information, and CLI power indication information, receive a CSI-reference signal (RS) based on the CMR according to the configuration information, measure CSIs based on the configuration information and the CMR-IMR association rule, and transmit a preconfigured number of CSIs among the measured CSIs to the base station.

13. The terminal of claim 12, wherein the CLI resource indication information is information for correcting a difference between locations where the configured IMR and a CLI measurement signal are transmitted, and
wherein the CLI power indication information is information for indicating a power difference between an interference measurement time in the configured IMR and a downlink data transmission time.

14. The terminal of claim 12,
wherein the CMR-IMR association rule defines an arbitrary related identifier, and includes at least one of the CMR-IMR mapping information corresponding to the arbitrary related identifier, the CLI resource indication information, and the CLI power indication information, or
wherein the CMR-IMR association rule defines an arbitrary related identifier, and in case of including the CMR-IMR mapping information corresponding to the arbitrary related identifier, the CMR-IMR mapping information includes at least one IMR information mapped to an arbitrary CMR, and at least one of the CLI resource indication information and the CLI power indication information is transmitted via downlink control information (DCI) or a medium access control - control element (MAC CE), and
wherein the message is a radio resource control (RRC) message.

15. The terminal of claim 12, wherein the controller controls to receive CSI reporting information for indicating the preconfigured number of CSIs to be transmitted to the base station through the transceiver,
wherein the configuration information includes information for configuring the CMR and information for configuring the IMR, and
the number of configured CMRs and the number of configured IMRs do not match.
